# EUROPEAN PATENT APPLICATION

(11) **EP 4 769 595 A2**
(43) Date of publication of application: **01.07.2026**
(21) Application number: 25225390.1
(22) Date of filing: 19.12.2025
(51) Int. Cl.: H01M 10/04, H01M 10/613, H01M 50/209, H01M 50/342, H01M 10/0587

(54) **POWER STORAGE DEVICE**

(30) Priority: 24.12.2024 JP 2024227386
(71) Applicant: Toyota Jidosha Kabushiki Kaisha, Toyota-shi, Aichi-ken 471-8571 (JP); Prime Planet Energy & Solutions, Inc., Chuo-ku, Tokyo 103-0022 (JP)
(72) Inventor: ONO, Masato, Toyota-shi, Aichi-ken 471-8571 (JP); OSE, Norihiro, Toyota-shi, Aichi-ken 471-8571 (JP); SAKASHITA, Yasuhiro, Toyota-shi, Aichi-ken 471-8571 (JP); YANASE, Koichi, Toyota-shi, Aichi-ken 471-8571 (JP); HARA, Takeru, Toyota-shi, Aichi-ken 471-8571 (JP); YOKOI, Yuka, Toyota-shi, Aichi-ken 471-8571 (JP); UMEMURA, Kohji, Tokyo 103-0022 (JP); IMABORI, Toshiki, Tokyo 103-0022 (JP); HIRANO, Yoshinori, Tokyo 103-0022 (JP); FUJIMURA, Satoshi, Tokyo 103-0022 (JP)
(74) Representative: Winter, Brandl - Partnerschaft mbB

(57) **Abstract**

A power storage device (3) includes a first electrode assembly (81), a second electrode assembly (91), and a housing case (20). The housing case (20) includes a first end plate (22a) and a second end plate (21aa) on which an exhaust valve (21ab) is formed, The first electrode assembly (81) and the second electrode assembly (91) are disposed such that a first winding axis (α1) and a second winding axis (α2) pass through the first end plate (22a) and the second end plate (21aa). The first electrode assembly (81) has a first hollow portion (S1) formed therein. The second electrode assembly (91) has a second hollow portion (S2). When the exhaust valve (21ab) is viewed in plan view from an axial direction, the exhaust valve (21ab) is disposed so as to be away from at least one of a first hollow portion (S1) and a second hollow portion (S2).

## Description

### BACKGROUND OF THE INVENTION

### 1. Field of the Invention

The present disclosure relates to a power storage device.

### 2. Description of Related Art

Various types of power storage cells have been proposed for use in power storage devices. For example, Japanese Unexamined Patent Application Publication No. 2014-154292 (JP 2014-154292 A) discloses a power storage cell having a housing case and an electrode assembly housed in the housing case. An exhaust valve is formed in the housing case.

### SUMMARY OF THE INVENTION

Positioning of the exhaust valve disclosed in JP 2014-154292 A does not take into consideration positional relation with respect to a winding center of a wound body, which is the electrode assembly housed in the power storage cell. When internal pressure inside the housing case increases due to gas generated by the electrode assembly, pressure distribution inside the housing case becomes uneven. In particular, a winding center portion of the winding readily becomes a gas flow portion when gas is discharged. Accordingly, the internal pressure of the housing case near a winding center face tends to increase, and by providing an exhaust valve in this portion, the exhaust valve can be opened immediately when the internal pressure inside the housing case increases. On the other hand, when the exhaust valve is disposed overlapping with multiple central winding portions, exhaust gas is readily blown directly onto the exhaust valve inside the housing case, and from the perspective of the pressure distribution throughout the housing case, there is a concern that the exhaust valve will open before the internal pressure inside the housing case reaches a predetermined pressure.

The present disclosure provides a power storage device that suppresses an exhaust valve from opening before internal pressure of a housing case of a power storage cell installed in the power storage device reaches a predetermined pressure.

A power storage device according to the present disclosure includes a first electrode assembly, a second electrode assembly, and a housing case. The first electrode assembly includes a first electrode sheet, a first separator, a second electrode sheet, and a second separator. The first electrode assembly is fashioned so as to surround a periphery of a first winding axis extending in an axial direction. The second electrode assembly is disposed adjacent to the first electrode assembly, and also includes a third electrode sheet, a third separator, a fourth electrode sheet, and a fourth separator. The second electrode assembly is fashioned so as to surround a periphery of a second winding axis extending in the axial direction. The housing case houses the first electrode assembly and the second electrode assembly. The housing case includes a first end plate and a second end plate on which an exhaust valve is provided. The first electrode assembly and the second electrode assembly are disposed such that the first winding axis and the second winding axis pass through the first end plate and the second end plate. The first electrode sheet is situated further on an inner peripheral side than the second electrode sheet in a first radial direction that intersects with the axial direction and is also centered on the first winding axis. The third electrode sheet is situated further on an inner peripheral side than the fourth electrode sheet in a second radial direction that intersects with the axial direction and is also centered on the second winding axis. The first electrode assembly includes a first winding end face situated on the second end plate side and a second winding end face situated on the first end plate side, and a first hollow portion is fashioned inside the first electrode assembly, the first hollow portion extending from the first winding end face to the second winding end face. The first hollow portion is defined by the first electrode sheet situated at an innermost side in the first radial direction. The second electrode assembly includes a third winding end face situated on the second end plate side and a fourth winding end face situated on the first end plate side, and a second hollow portion is fashioned inside the second electrode assembly, the second hollow portion extending from the third winding end face to the fourth winding end face. The second hollow portion is defined by the third electrode sheet situated at an innermost side in the second radial direction. When the exhaust valve, the first winding end face, and the third winding end face are viewed in plan view from the axial direction, the exhaust valve is disposed so as to be away from at least one of the first hollow portion and the second hollow portion.

In the power storage device according to an aspect of the present disclosure, when the exhaust valve, the first winding end face, and the third winding end face are viewed in plan view from the axial direction, the exhaust valve may be disposed between the first hollow portion and the second hollow portion.

In the power storage device according to the aspect of the present disclosure, the second end plate may include an inner face and an outer face that are aligned in the axial direction. The outer face may be disposed away from the first electrode assembly and the second electrode assembly relative to the inner face. The outer face includes an outer edge portion defining an outer edge of the outer face. A first arcuate portion may be fashioned at a side end portion of the first winding end face. A second arcuate portion may be fashioned at a side end portion of the third winding end face. When the outer face, the first winding end face, and the third winding end face are viewed in plan view in the axial direction, the outer edge portion, the first arcuate portion, and the second arcuate portion may define a gap region on the outer face. The exhaust valve may be disposed at a position at least partially overlapping with the gap region.

The power storage device according to the aspect of the present disclosure may further include a cooler. The second end plate may include an opening portion. The cooler does not have to face the opening portion in the axial direction. The exhaust valve may face at least a part of the opening portion in the axial direction.

In the power storage device according to the aspect of the present disclosure, the second end plate may include an inner face and an outer face that are arrayed in the axial direction, and a counterface region defined within the outer face. The outer face may be disposed away from the first electrode assembly and the second electrode assembly relative to the inner face. The counterface region may be a region in which the outer face and the first winding end face overlap each other when the outer face and the first winding end face are viewed in plan view from the axial direction. The cooler may be disposed at a position facing the counterface region in the axial direction. The exhaust valve may be disposed so as to circumvent the counterface region.

In the power storage device according to the aspect of the present disclosure, the first end plate may be provided with an electrode terminal.

In the power storage device according to the aspect of the present disclosure, the power storage device is disposed downward from a bottom portion of a vehicle. The first end plate may be disposed closer to the bottom portion than the second end plate.

According to the power storage device of the present disclosure, the exhaust valve can be suppressed from opening before the internal pressure of the housing case of the power storage cell installed in the power storage device reaches a predetermined pressure.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram illustrating a vehicle in which is installed a power storage device according to an embodiment of the present disclosure;
FIG. 2 is an exploded perspective view of the power storage device according to the embodiment of the present disclosure;
FIG. 3 is a perspective view of a power storage cell according to the embodiment of the present disclosure;
FIG. 4 is an exploded perspective view of the power storage cell according to the embodiment of the present disclosure;
FIG. 5 is a cross-sectional view of a first electrode assembly housed in the power storage cell illustrated in FIG. 3, as viewed in a direction of arrows along line V-V;
FIG. 6 is an enlarged view of a first hollow portion illustrated in FIG. 5;
FIG. 7 is a cross-sectional view of a second electrode assembly housed in the power storage cell illustrated in FIG. 3, as viewed in a direction of arrows along line VII-VII;
FIG. 8 is an end view of the power storage device illustrated in FIG. 1 as viewed in the direction of the arrows along line VIII-VIII;
FIG. 9 is a plan view of an outer face of a bottom plate of the power storage cell illustrated in FIG. 8, as viewed from a position away from the bottom plate toward a cooler side in an axial direction;
FIG. 10 is a plan view of a first modification of the bottom plate of the power storage cell according to the embodiment of the present disclosure, as viewed from a position away from the bottom plate toward the cooler side in the axial direction;
FIG. 11 is a plan view of a second modification of the bottom plate of the power storage cell according to the embodiment of the present disclosure, as viewed from a position away from the bottom plate toward the cooler side in the axial direction;
FIG. 12 is a plan view of a third modification of the power storage cell according to the embodiment of the present disclosure, as viewed from a position away from the bottom plate toward the cooler side in the axial direction; and
FIG. 13 is a plan view of a fourth modification of the power storage cell according to the embodiment of the present disclosure, as viewed from a position away from the bottom plate toward the cooler side in the axial direction.

### DETAILED DESCRIPTION OF EMBODIMENTS

An embodiment and modifications of the present disclosure will be described in detail below with reference to the drawings. The same or corresponding portions are denoted by the same signs throughout the drawings, and description thereof will not be repeated.

### Embodiment

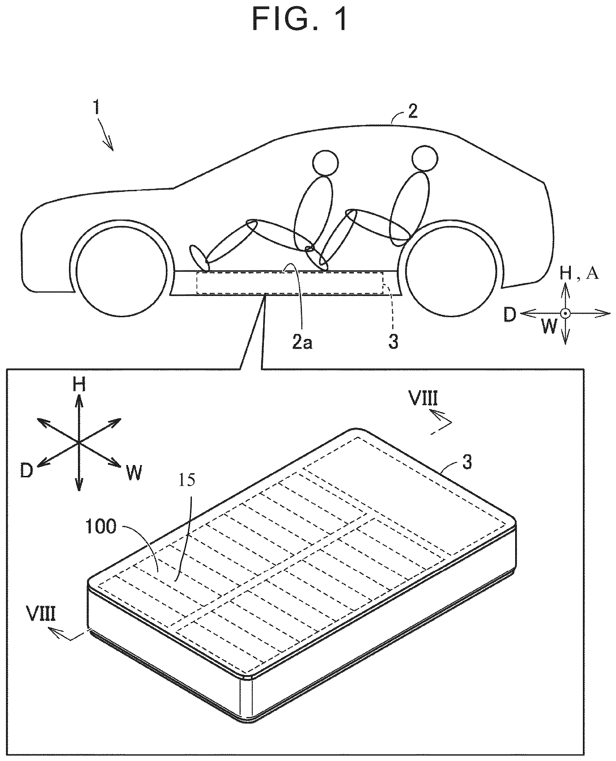

FIG. 1 is a side view schematically illustrating a vehicle in which is installed a power storage device according to the present embodiment. Note that an up-down direction H in FIG. 1 indicates an up-down direction of the vehicle 1. Note that the up-down direction H is the same direction as an axial direction A of a first winding axis α1 of a first electrode assembly 81 described below. A width direction W indicates a width direction of the vehicle 1. A front-rear direction D indicates a front-rear direction of the vehicle 1.

The vehicle 1 includes a vehicle body 2 and a power storage device 3. Examples of the vehicle 1 include a plug-in hybrid electric vehicle (PHEV), a battery electric vehicle (BEV), and a fuel cell electric vehicle (FCEV). The power storage device 3 is disposed downward from a bottom portion 2a of the vehicle body 2.

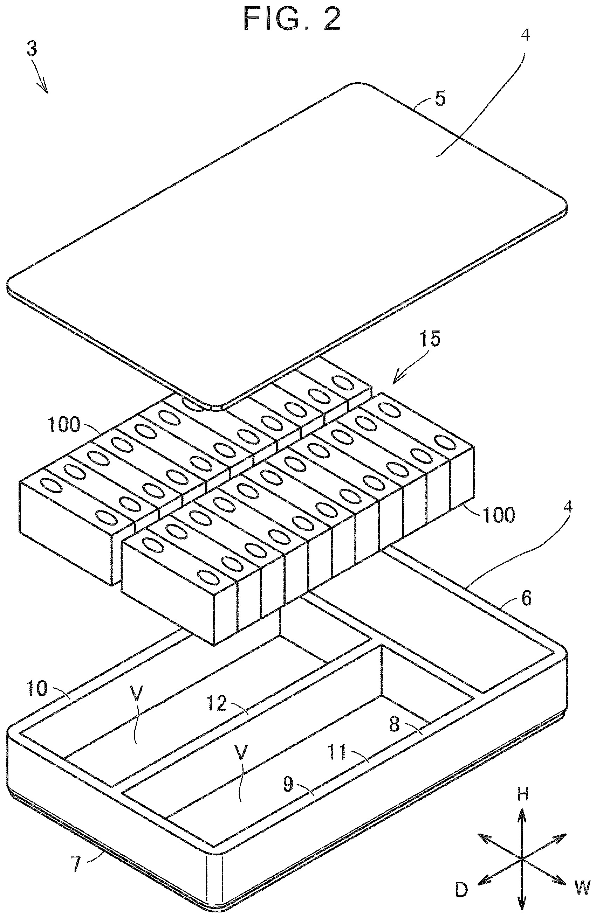

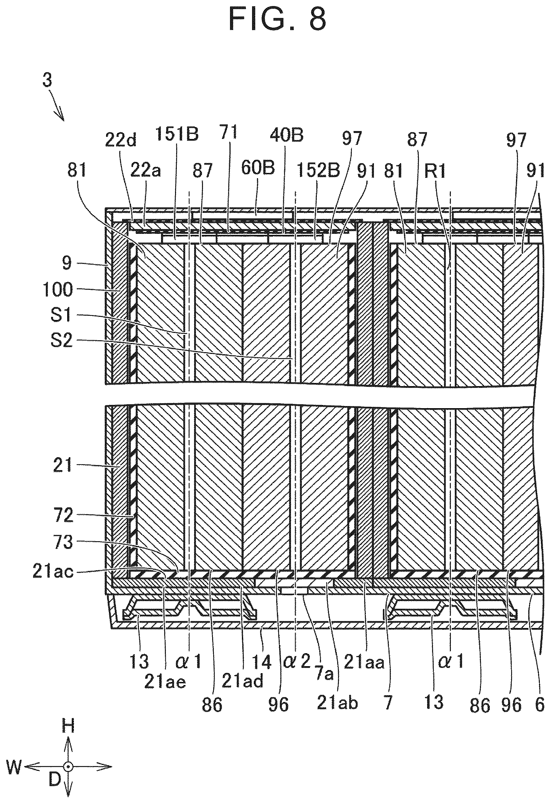

FIG. 2 is an exploded perspective view of the power storage device according to the present embodiment. The power storage device 3 includes a storage case 4, power storage stacks 15, and a cooler 13 that is illustrated in FIG. 8.

The storage case 4 includes an upper cover 5 and a lower case 6. The storage case 4 defines housing spaces V that are defined by the upper cover 5 and the lower case 6.

The upper cover 5 is formed to cover the lower case 6 that is formed opening upward.

The lower case 6 includes a bottom wall 7 and a wall portion 8. The bottom wall 7 supports the power storage stacks 15 in the up-down direction H. The bottom wall 7 is formed with an opening portion 7a (see FIG. 8) which will be described later. The opening portion 7a is disposed at a position opposite to an exhaust valve 21ab, which will be described later.

The wall portion 8 is formed rising upward from the bottom wall 7 in the up-down direction H. The wall portion 8 has a peripheral wall 9 and a reinforcing portion 12. The peripheral wall 9 is formed extending in a frame-like shape, and is also formed extending upward in the up-down direction H from an outer peripheral edge of the bottom wall 7. The peripheral wall 9 has a first side wall 10 and a second side wall 11. The first side wall 10 and the second side wall 11 are formed extending in the front-rear direction D and are also arrayed across a spacing in the width direction W.

The reinforcing portion 12 is formed to extend in the front-rear direction D. The reinforcing portion 12 is disposed so as to pass through the middle between the first side wall 10 and the second side wall 11 in the width direction W.

The power storage stacks 15 are housed in the housing spaces V and are also disposed on an upper face of the bottom wall 7. The power storage stacks 15 are made up of a plurality of power storage cells 100. The power storage cells 100 are arrayed in the front-rear direction D. The power storage cells 100 are formed in rectangular cuboid shapes that are elongated in the width direction W.

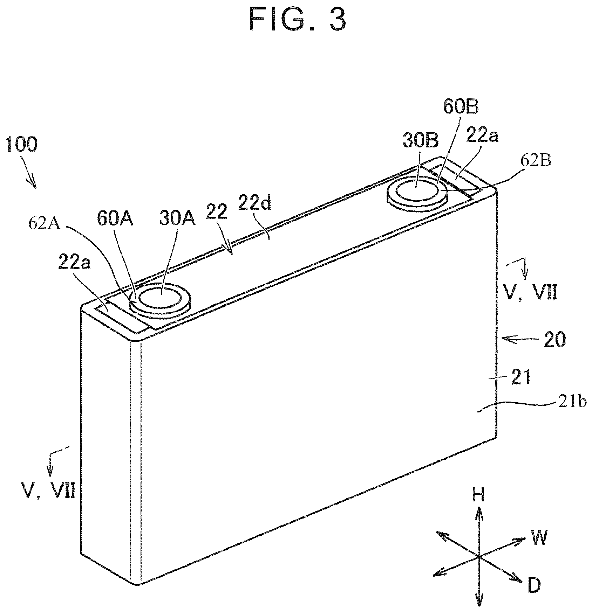

FIG. 3 illustrates a perspective view of the power storage cell 100. As illustrated in FIG. 3, the power storage cell 100 according to the present embodiment is a so-called prismatic battery. The power storage cell 100 may be a secondary battery that is configured to be capable of being charged and discharged, such as a lithium-ion battery or a nickel metal hydride battery or the like.

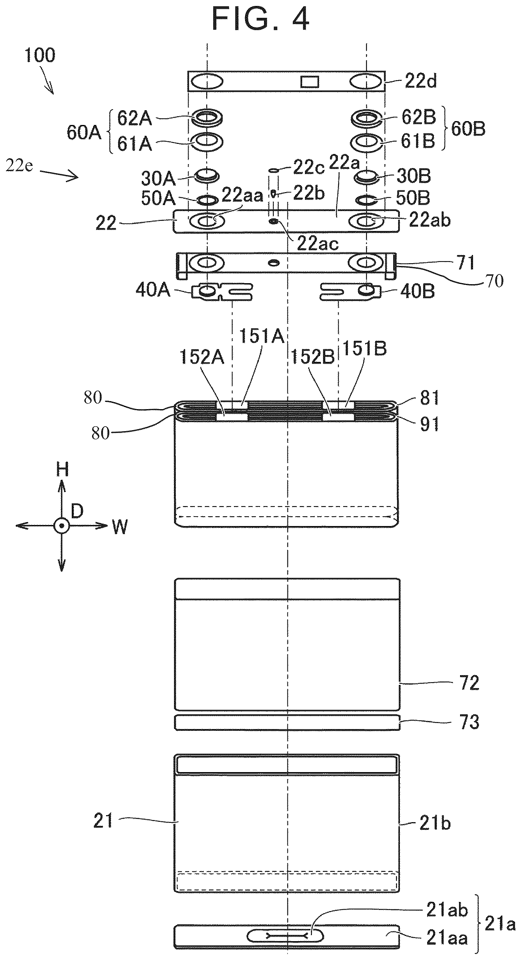

FIG. 4 is an exploded perspective view of a battery according to the embodiment of the present disclosure. As illustrated in FIG. 4, the power storage cell 100 includes a housing case 20, an insulating member 70, and a plurality of electrode assemblies 80.

The housing case 20 is electrically conductive. The housing case 20 is made of a metal such as aluminum or the like. The housing case 20 houses the electrode assemblies 80. The housing case 20 also houses an electrolytic solution that is omitted from illustration. The housing case 20 includes a case body 21 and a top plate 22.

The case body 21 includes a bottom plate 21a and a peripheral wall 21b rising upright from the bottom plate 21a. The bottom plate 21a is joined to the peripheral wall 21b at an outer peripheral edge portion of the bottom plate 21a.

The bottom plate 21a includes a bottom body 21aa and the exhaust valve 21ab. Note that the bottom body 21aa is an example of "second end plate" according to the present disclosure.

The exhaust valve 21ab is formed in the bottom body 21aa. The exhaust valve 21ab is a known exhaust valve. For example, the exhaust valve 21ab has a general portion that is processed to be thinner than the bottom body 21aa. A recessed groove for fracturing is formed in the general portion of the exhaust valve 21ab. By appropriately designing this recessed groove, a small increase in pressure inside the housing case 20 can selectively split open the exhaust valve 21ab. The recessed groove is formed, for example, by a die and a punch. In plan view in the axial direction A, the recessed groove is formed in an elliptical or a linear shape.

The peripheral wall 21b rises upright from the bottom body 21aa. An opening is formed at an upper end of the peripheral wall 21b. The peripheral wall 21b has a substantially rectangular outer shape as viewed in the up-down direction H. The peripheral wall 21b and the bottom plate 21a are arrayed in the up-down direction H. The peripheral wall 21b is made of a metal such as aluminum or the like.

The top plate 22 includes a top plate body 22a, a sealing plug 22b, a plug cover 22c, an insulating cover 22d, and electrode terminals 22e. Note that the top plate body 22a is an example of "first end plate" according to the present disclosure.

The top plate body 22a is joined to the peripheral wall 21b by welding or the like, so as to close the opening of the peripheral wall 21b. The top plate body 22a is provided with the electrode terminals 22e. The top plate body 22a has formed therein a first connecting hole 22aa, a second connecting hole 22ab, and a liquid injection hole 22ac. The liquid injection hole 22ac is a through hole for injecting an electrolyte into the case body 21 during a manufacturing process of the power storage cell 100. The top plate body 22a is disposed closer to the bottom portion 2a of the vehicle body 2 than the bottom body 21aa.

The sealing plug 22b seals off the liquid injection hole 22ac. The plug cover 22c covers the liquid injection hole 22ac and the sealing plug 22b. The insulating cover 22d covers the liquid injection hole 22ac, the sealing plug 22b, and the plug cover 22c.

The electrode terminals 22e have a first external terminal 30A, a second external terminal 30B, a first connecting member 40A, a second connecting member 40B, a first seal ring 50A, a second seal ring 50B, a first terminal supporting portion 60A, and a second terminal supporting portion 60B.

The first external terminal 30A and the second external terminal 30B are provided in the power storage cell 100 so as to be externally exposed therefrom.

The first connecting member 40A and the second connecting member 40B are electrically conductive. At least part of the first connecting member 40A and the second connecting member 40B is disposed inside the housing case 20.

The first external terminal 30A or the first connecting member 40A is inserted through the first connecting hole 22aa. The first external terminal 30A and the first connecting member 40A are joined together. The first connecting member 40A is electrically connected to the electrode assemblies 80. Accordingly, the first external terminal 30A is electrically connected to the electrode assemblies 80.

The second external terminal 30B or the second connecting member 40B is inserted through the second connecting hole 22ab. The second external terminal 30B and the second connecting member 40B are joined together. The second connecting member 40B is electrically connected to the electrode assemblies 80. Thus, the second external terminal 30B is electrically connected to the electrode assemblies 80.

The first seal ring 50A is provided along the first connecting hole 22aa. The first seal ring 50A is provided in a gap between the top plate body 22a and the first external terminal 30A, to seal off this gap. The second seal ring 50B is provided along the second connecting hole 22ab. The second seal ring 50B is provided in a gap between the top plate body 22a and the second external terminal 30B to seal off this gap. The first seal ring 50A and the second seal ring 50B have electrically insulating properties.

The first terminal supporting portion 60A is retained on the top plate body 22a. The first terminal supporting portion 60A supports the first external terminal 30A from an outer peripheral side of the first external terminal 30A. The first terminal supporting portion 60A includes a first retaining ring 61A and a first covering ring 62A. The first retaining ring 61A extends annularly so as to surround the first connecting hole 22aa, and is directly retained by the top plate body 22a. The first covering ring 62A covers the first retaining ring 61A. The first retaining ring 61A supports the first external terminal 30A via the first covering ring 62A. The first covering ring 62A is made of a resin member having electrically insulating properties.

The second terminal supporting portion 60B is retained on the top plate body 22a. The second terminal supporting portion 60B supports the second external terminal 30B from an outer peripheral side of the second external terminal 30B. The second terminal supporting portion 60B includes a second retaining ring 61B and a second covering ring 62B. The second retaining ring 61B extends annularly so as to surround the second connecting hole 22ab, and is directly retained by the top plate body 22a. The second covering ring 62B covers the second retaining ring 61B. The second retaining ring 61B supports the second external terminal 30B via the second covering ring 62B. The second covering ring 62B is made of a resin member that has electrically insulating properties.

The insulating member 70 is electrically insulating. The insulating member 70 is disposed between the electrode assemblies 80 and the housing case 20. The insulating member 70 electrically insulates the electrode assemblies 80 and the housing case 20 from each other. The insulating member 70 includes an insulating bracket 71, a peripheral face insulating portion 72, and a bottom face insulating portion 73.

The insulating bracket 71 is disposed between the electrode assemblies 80 and the top plate body 22a. The insulating bracket 71 has a relatively high rigidity and is in contact with both the electrode assemblies 80 and the top plate body 22a. Thus, the electrode assemblies 80 are fixed to the housing case 20 in the up-down direction H. The peripheral face insulating portion 72 is disposed between the electrode assemblies 80 and the peripheral wall 21b. The peripheral face insulating portion 72 is made of a member that is in a form of a film. The bottom face insulating portion 73 is disposed between the electrode assemblies 80 and the bottom plate 21a. The bottom face insulating portion 73 is made of a member that is in a form of a film. In the present embodiment, the bottom face insulating portion 73 is bonded to the electrode assemblies 80.

The electrode assemblies 80 are so-called wound electrode assemblies. The electrode assemblies 80 typically have a first electrode assembly 81 and a second electrode assembly 91. The first electrode assembly 81 and the second electrode assembly 91 are arranged adjacent to each other in the front-rear direction D. The peripheral face insulating portion 72 may integrally cover the electrode assemblies 80 such that the first electrode assembly 81 and the second electrode assembly 91 are fixed to each other.

The first electrode assembly 81 has a first tab 151A and a second tab 151B. The second electrode assembly 91 has a first tab 152A and a second tab 152B. The first tab 151A electrically connects a first electrode sheet 82, which will be described later, of the first electrode assembly 81, to the first connecting member 40A. The second tab 151B electrically connects a second electrode sheet 83, which will be described later, of the first electrode assembly 81, to the second connecting member 40B. The first tab 152A electrically connects the third electrode sheet 92, which will be described later, of the second electrode assembly 91, to the first connecting member 40A. The second tab 152B electrically connects the fourth electrode sheet 93, which will be described later, of the second electrode assembly 91, to the second connecting member 40B.

The first tab 151A and the first tab 152A are disposed side by side in the front-rear direction D. The first tabs 151A and 152A are joined to each other by, for example, ultrasonic welding. The first tabs 151A and 152A are joined to the first connecting member 40A by, for example, ultrasonic welding. The second tab 151B and the second tab 152B are disposed side by side in the front-rear direction D. The second tabs 151B and 152B are joined to each other by, for example, ultrasonic welding. The second tabs 151B and 152B are joined to the second connecting member 40B by, for example, ultrasonic welding.

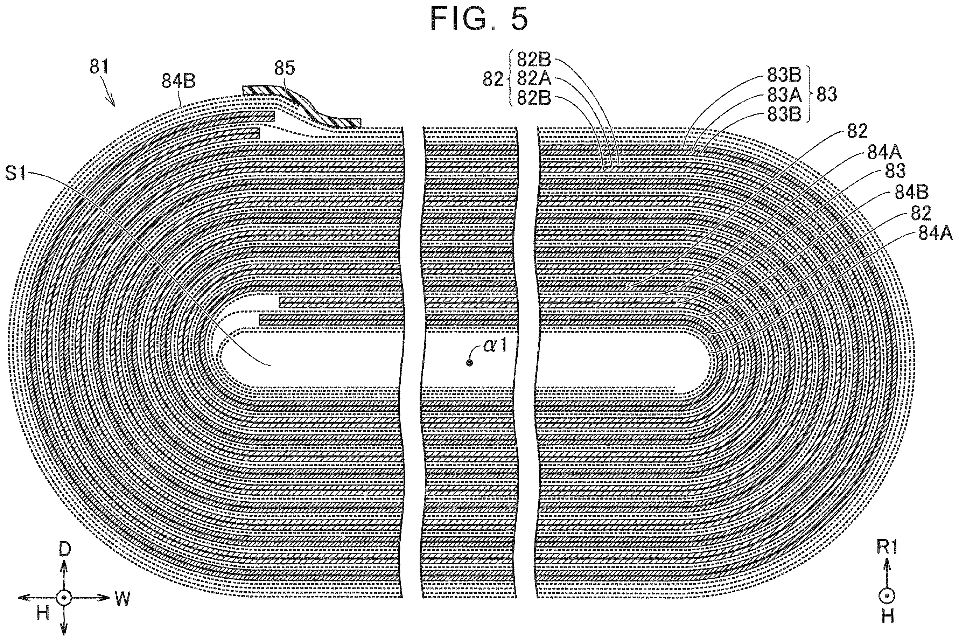

The first electrode assembly 81 will be described in detail below with reference to FIG. 5. FIG. 5 is an end view of the first electrode assembly 81 housed in the power storage cell 100 illustrated in FIG. 3, as viewed in a direction of arrows along line V-V.

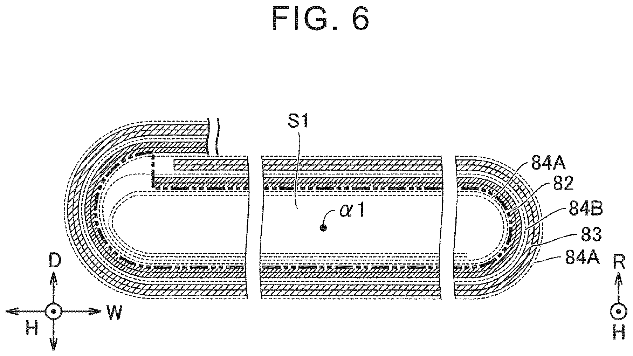

The first electrode assembly 81 includes the first electrode sheet 82, the second electrode sheet 83, a first separator 84A, a second separator 84B, and a tape member 85. The first electrode sheet 82, the second electrode sheet 83, the first separator 84A, and the second separator 84B have sheet-like outer shapes. The first electrode sheet 82, the second electrode sheet 83, the first separator 84A, and the second separator 84B are collectively referred to as a sheet group. The first electrode assembly 81 is formed by winding the first electrode sheet 82 and the second electrode sheet 83 so as to surround a periphery of the first winding axis α1, with the first separator 84A and the second separator 84B interposed therebetween. That is to say, the first electrode assembly 81 is a so-called wound electrode assembly. Here, the first winding axis α1 is the axis of the first electrode assembly 81 extending in the axial direction A, and the axial direction A is the same direction as the up-down direction H in the present embodiment. The first electrode assembly 81 is formed by the first separator 84A, the first electrode sheet 82, the second separator 84B, and the second electrode sheet 83 arranged in this order, so as to surround the periphery of the first winding axis α1, from an inner periphery side in a first radial direction R1 that intersects with the axial direction A and is also centered on the first winding axis α1. Thus, a first hollow portion S1 is formed in the first electrode assembly 81, centered on the first winding axis α1. More specifically, in the present embodiment, the first electrode sheet 82 is situated more inward than the second electrode sheet 83 in the first radial direction R1, and as illustrated in FIG. 6, the first hollow portion S1 is defined by the first electrode sheet 82, which is situated most inward in the first radial direction R1.

The first electrode sheet 82 includes a first current collector 82A and a first active material layer 82B. The second electrode sheet 83 includes a second current collector 83A and a second active material layer 83B. In the present embodiment, the first electrode sheet 82 is a cathode, and the second electrode sheet 83 is an anode. However, the first electrode sheet 82 may be the anode and the second electrode sheet 83 may be the cathode.

The first separator 84A and the second separator 84B separate the first electrode sheet 82 and the second electrode sheet 83, while allowing ions to travel between the first electrode sheet 82 and the second electrode sheet 83. The ions are, for example, lithium ions. The first separator 84A and the second separator 84B have electrically insulating properties. The first separator 84A is situated on the innermost side in the first radial direction R1. On the other hand, the second separator 84B is situated on the outermost side in the first radial direction R1. The edge of the second separator 84B on an outer peripheral side in the first radial direction R1 is fixed by the tape member 85 disposed on an outer peripheral face of the second separator 84B.

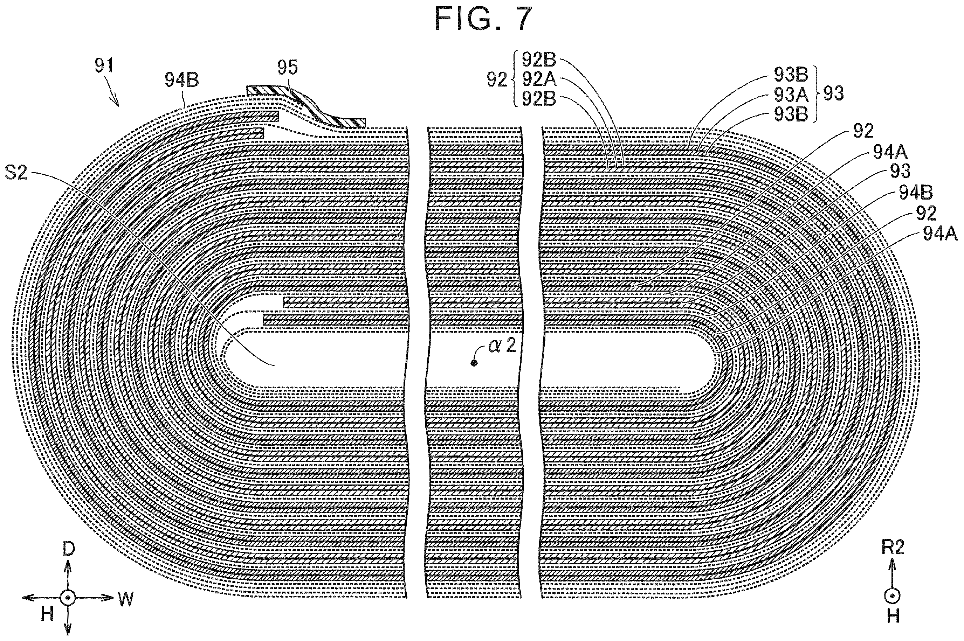

The second electrode assembly 91 will be described in detail below with reference to FIG. 7. Note that the first electrode assembly 81 and the second electrode assembly 91 have substantially the same configuration. FIG. 7 is a cross-sectional view of the second electrode assembly 91 housed in the power storage cell 100 illustrated in FIG. 3, as viewed in a direction of arrows along line VII-VII.

The second electrode assembly 91 includes a third electrode sheet 92, a fourth electrode sheet 93, a third separator 94A, a fourth separator 94B, and a tape member 95. The third electrode sheet 92, the fourth electrode sheet 93, the third separator 94A, and the fourth separator 94B, have sheet-like outer shapes. The third electrode sheet 92, the fourth electrode sheet 93, the third separator 94A, and the fourth separator 94B are collectively referred to as a sheet group. The second electrode assembly 91 is formed by winding the third electrode sheet 92 and the fourth electrode sheet 93 so as to surround a periphery of a second winding axis α2, with the third separator 94A and the fourth separator 94B interposed therebetween. That is to say, the second electrode assembly 91 is a so-called wound electrode assembly. Here, the second winding axis α2 is an axis of the second electrode assembly 91 extending in the axial direction A, and the axial direction A is the same direction as the up-down direction H in the present embodiment. The second electrode assembly 91 is formed by the third separator 94A, the third electrode sheet 92, the fourth separator 94B, and the fourth electrode sheet 93 arranged in this order, so as to surround the periphery of the second winding axis α2, from an inner periphery side in a second radial direction R2 that intersects with the axial direction A and is also centered on the second winding axis α2. Thus, a second hollow portion S2 is formed in the second electrode assembly 91, centered on the second winding axis α2. More specifically, in the present embodiment, the third electrode sheet 92 is situated more inward than the fourth electrode sheet 93 in the second radial direction R2, and the second hollow portion S2 is defined by the third electrode sheet 92, which is situated most inward in the second radial direction R2.

The third electrode sheet 92 includes a third current collector 92A and a third active material layer 92B. The fourth electrode sheet 93 includes a fourth current collector 93A and a fourth active material layer 93B.

The third separator 94A and the fourth separator 94B separate the third electrode sheet 92 and the fourth electrode sheet 93, while allowing ions to travel between the third electrode sheet 92 and the fourth electrode sheet 93. The ions are, for example, lithium ions. The third separator 94A and the fourth separator 94B have electrically insulating properties. The third separator 94A is situated on the innermost side in the second radial direction R2. On the other hand, the fourth separator 94B is situated on the outermost side in the second radial direction R2. The edge of the fourth separator 94B on an outer peripheral side in the second radial direction R2 is fixed by the tape member 95 disposed on an outer peripheral face of the fourth separator 94B.

FIG. 8 is an end view of the power storage device illustrated in FIG. 1 as viewed in a direction of arrows along line VIII-VIII. Within the housing case 20, the first electrode assembly 81 and the second electrode assembly 91 are disposed such that the first winding axis α1 and the second winding axis α2 pass through the top plate 22 and the bottom plate 21a.

The first electrode assembly 81 has a first winding end face 86 and a second winding end face 87. The first winding end face 86 and the second winding end face 87 are disposed with a distance therebetween in the axial direction A. The first winding end face 86 is situated on the bottom plate 21a side. The second winding end face 87 is situated on the top plate 22 side. Here, the first hollow portion S1 is formed so as to extend from the first winding end face 86 to the second winding end face 87.

The second electrode assembly 91 has a third winding end face 96 and a fourth winding end face 97. The third winding end face 96 and the fourth winding end face 97 are disposed with a distance therebetween in the axial direction A. The third winding end face 96 is situated on the bottom plate 21a side. The fourth winding end face 97 is situated on the top plate 22 side. Here, the second hollow portion S2 is formed so as to extend from the third winding end face 96 to the fourth winding end face 97.

The bottom plate 21a of the case body 21 has an inner face 21ac and an outer face 21ad. The inner face 21ac and the outer face 21ad are disposed with a distance therebetween in the axial direction A. The inner face 21ac is situated on the electrode assembly 80 side relative to the outer face 21ad. The outer face 21ad is situated on the bottom wall 7 side such relative to the inner face 21ac. The outer face 21ad is disposed away from the first electrode assembly 81 and the second electrode assembly 91 with respect to the inner face 21ac. The outer face 21ad has a counterface region 21ae. The counterface region 21ae is a region defined within the outer face 21ad, and is also a region where the outer face 21ad and the first winding end face 86 overlap when viewing the outer face 21ad and the first winding end face 86 in planar view from the axial direction A.

The opening portion 7a is formed in the bottom wall 7 of the storage case 4. The opening portion 7a is disposed at a position facing the exhaust valve 21ab. The power storage device 3 includes a cooler 13. The cooler 13 is provided on the bottom wall 7. The cooler 13 is disposed on the opposite side from the power storage cells 100 in the up-down direction H, with reference to the bottom wall 7. More specifically, the cooler 13 is disposed in a position facing the counterface region 21ae in the axial direction A, with the bottom wall 7 interposed therebetween. Note that the term "the cooler 13 is disposed in a position facing the counterface region 21ae" means that when the cooler 13 and the counterface region 21ae are viewed in plan view from the axial direction A, at least part of the cooler 13 overlaps with the counterface region 21ae. In the present embodiment, the cooler 13 cools the power storage cells 100 of the power storage stack 15. A cooling medium (oil or the like) flows through the cooler 13.

The storage case 4 further has a shear panel 14. The shear panel 14 is situated on the opposite side from the power storage cells 100 in the up-down direction H, with reference to the bottom wall 7. The shear panel 14 is provided on the bottom wall 7 with the cooler 13 interposed therebetween. The shear panel 14 has a function of protecting the lower case 6. The shear panel 14 may be formed in a flat plate shape.

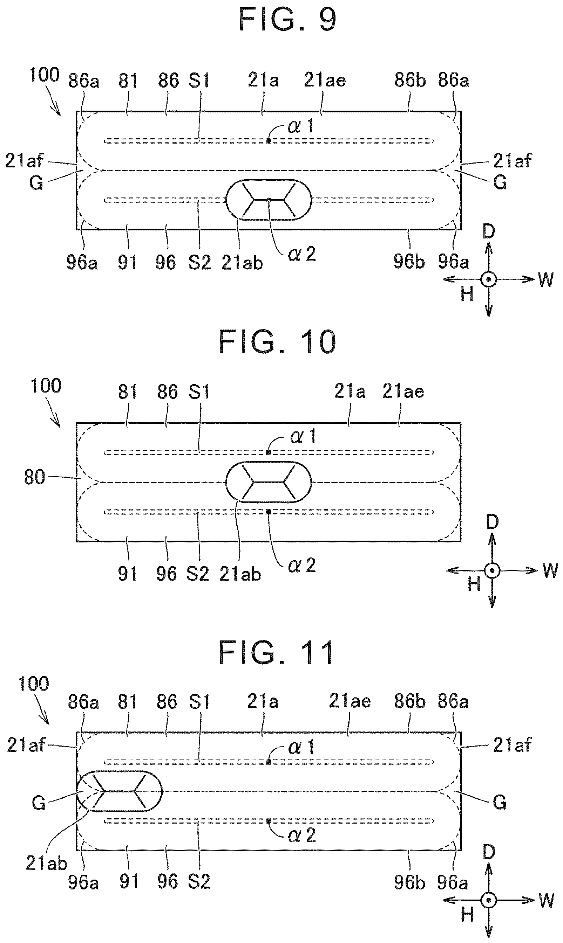

FIG. 9 is a plan view of an outer face of the bottom plate of the power storage cell illustrated in FIG. 8, as viewed from a position away from the bottom plate toward the cooler side in the axial direction.

The first winding end face 86 of the first electrode assembly 81 has a pair of first arcuate portions 86a and a pair of first linear portions 86b. The first arcuate portions 86a and the first linear portions 86b form an outer edge of the first winding end face 86. The first arcuate portions 86a are each situated at side end portions of the first winding end face 86 and are also disposed with a distance therebetween in the width direction W. The first linear portions 86b are each disposed with a distance therebetween in the front-rear direction D. One of the first linear portions 86b connects an end portion of one of the first arcuate portions 86a and an end portion of the other of the first arcuate portions 86a. The other of the first linear portions 86b connects another end portion of one of the first arcuate portions 86a and another end portion of the other of the first arcuate portions 86a.

The third winding end face 96 of the second electrode assembly 91 has a pair of second arcuate portions 96a and a pair of second linear portions 96b. The second arcuate portions 96a and the second linear portions 96b form an outer edge of the third winding end face 96. The second arcuate portions 96a are each situated at side end portions of the third winding end face 96 and are also disposed with a distance therebetween in the width direction W. The second linear portions 96b are each disposed with a distance therebetween in the front-rear direction D. One of the second linear portions 96b connects an end portion of one of the second arcuate portions 96a and an end portion of the other of the second arcuate portions 96a. The other of the second linear portions 96b connects another end portion of one of the second arcuate portions 96a and another end portion of the other of the second arcuate portions 96a.

The outer face 21ad of the bottom plate 21a has an outer edge portion 21af that defines an outer edge of the outer face 21ad. When viewing the outer face 21ad, the first winding end face 86, and the third winding end face 96 in plan view from the axial direction A, a region on the outer face 21ad defined by the outer edge portion 21af, the first arcuate portion 86a, and the second arcuate portion 96a, will be referred to as "gap region G".

The first electrode assembly 81 has the first hollow portion S1 formed centered on the first winding axis α1, and the first winding end face 86. The second electrode assembly 91 has the second hollow portion S2 formed centered on the second winding axis α2, and the third winding end face 96. The bottom plate 21a of the housing case 20 that houses the first electrode assembly 81 is provided with the exhaust valve 21ab. The counterface region 21ae is defined on the outer face 21ad of the bottom plate 21a.

When the exhaust valve 21ab, the first winding end face 86, and the third winding end face 96 are viewed in a plan view from the axial direction A, the exhaust valve 21ab in the present embodiment is disposed away from the first hollow portion S1. More specifically, the exhaust valve 21ab is disposed so as to circumvent the counterface region 21ae. Here, the term "the exhaust valve 21ab is disposed away from the first hollow portion S1" means that when the exhaust valve 21ab and the first hollow portion S1 are viewed in plan view from the axial direction A, the center portion of the exhaust valve 21ab does not overlap with the first hollow portion S1. Also, the term "the exhaust valve 21ab is disposed so as to circumvent the counterface region 21ae" means that when the exhaust valve 21ab and the counterface region 21ae are viewed in a plane from the axial direction A, the center portion of the exhaust valve 21ab does not overlap with the counterface region 21ae.

Note that the exhaust valve 21ab may be disposed such that the exhaust valve 21ab does not even partially overlap with at least one of the first hollow portion S1 and the second hollow portion S2.

Generally, gas is generated from the electrode assemblies 80 during use of the power storage cells 100. When internal pressure inside the housing case 20 increases due to gas generated by the electrode assemblies 80, pressure distribution inside the housing case 20 becomes uneven. The first hollow portion S1 and the second hollow portion S2 readily become gas flow portions when gas is discharged. Accordingly, the internal pressure acting on the housing case 20 facing the first hollow portion S1 and the second hollow portion S2 readily rises.

Here, a case in which the exhaust valve is disposed so as to overlap with a plurality of winding center portions (the first hollow portion S1 and the second hollow portion S2 in the present embodiment) will be described. In this case, when gas is generated from the first electrode assembly 81 and the second electrode assembly 91, both the gas discharged from the first hollow portion S1 and the gas discharged from the second hollow portion S2 are blown onto the exhaust valve. As a result, there is a concern that the exhaust valve will open before the internal pressure in the housing case 20 reaches a predetermined pressure.

On the other hand, in the power storage device 3 according to the present embodiment, the exhaust valve 21ab is disposed away from the first hollow portion S1. With this configuration, even if gas is generated from the first electrode assembly 81 and the second electrode assembly 91, the gas from the first hollow portion S1 can be suppressed from being blown onto the exhaust valve 21ab. This enables the exhaust valve 21ab to be suppressed from opening before the internal pressure in the housing case reaches the predetermined internal pressure.

According to such a configuration, the exhaust valve 21ab can be suppressed from opening before the internal pressure of the housing case 20 of the power storage cell 100 installed in the power storage device 3 reaches the predetermined pressure.

Note that while the example in which the exhaust valve 21ab is disposed away from the first hollow portion S1 has been described, the embodiment of the present disclosure is not limited to this. For example, it is sufficient for the exhaust valve 21ab to be disposed away from at least one of the first hollow portion S1 and the second hollow portion S2. For example, when the exhaust valve is disposed so as to overlap both the first hollow portion S1 and the second hollow portion S2, there is a concern that gas from both the first hollow portion S1 and the second hollow portion S2 will be blown onto the exhaust valve 21ab. On the other hand, when the exhaust valve 21ab is disposed away from at least one of the first hollow portion S1 and the second hollow portion S2, a situation can be circumvented in which gas from both the first hollow portion S1 and the second hollow portion S2 is blown onto the exhaust valve 21ab. Thus, the exhaust valve 21ab can be suppressed from opening before the internal pressure of the housing case 20 of the power storage cell 100 installed in the power storage device 3 reaches the predetermined pressure.

The cooler 13 of the power storage device 3 according to the present embodiment is disposed at a position facing the counterface region 21ae. Furthermore, the exhaust valve 21ab is disposed so as to circumvent the counterface region 21ae. The opening portion 7a is disposed at a position facing the exhaust valve 21ab. According to such a configuration, a situation can be circumvented in which the opening portion 7a is blocked by the cooler 13. This can suppress an outlet for the gas discharged from the exhaust valve 21ab from being blocked. Note that it is sufficient for the exhaust valve 21ab to face at least a part of the opening portion 7a.

Note that while the example in which the cooler 13 is disposed at a position facing the counterface region 21ae has been described, the embodiment of the present disclosure is not limited to this. For example, an arrangement may be made in which the cooler 13 does not face the opening portion 7a in the axial direction A, and also the exhaust valve 21ab faces a part of the opening portion 7a in the axial direction A. According to such a configuration, a situation can be circumvented in which the opening portion 7a is blocked by the cooler 13. This can suppress the outlet for the gas discharged from the exhaust valve 21ab from being blocked.

In the present embodiment, the top plate body 22a is provided with an electrode terminal 22e, and the bottom body 21aa is formed with the exhaust valve 21ab. According to such a configuration, when gas is discharged from the exhaust valve 21ab, the electrode terminal 22e can be suppressed from being short-circuited by debris contained in the gas.

In the present embodiment, the power storage device 3 is disposed downward from the bottom portion 2a of the vehicle 1, and the top plate body 22a is disposed closer to the bottom portion 2a than the bottom body 21aa. Also, the exhaust valve 21ab is formed in the bottom body 21aa. According to such a configuration, when gas is discharged from the exhaust valve 21ab, the gas can be suppressed from flowing into an interior of the vehicle 1.

### First Modification

In the present embodiment, an example has been described in which the exhaust valve 21ab is disposed away from at least one of the first hollow portion S1 and the second hollow portion S2, but the embodiment of the present disclosure is not limited to this. For example, as illustrated in FIG. 10, when the exhaust valve 21ab, the first winding end face 86, and the third winding end face 96 are viewed in plan view from the axial direction A, the exhaust valve 21ab may be disposed between the first hollow portion S1 and the second hollow portion S2. Further, the exhaust valve 21ab may be disposed so as not to overlap either the first hollow portion S1 or the second hollow portion S2. Note that FIG. 10 is a plan view of the outer face of the bottom plate of the power storage cell illustrated in FIG. 8, as viewed from a position away from the bottom plate toward the cooler side in the axial direction.

For example, when the exhaust valve 21ab is disposed away from at least one of the first hollow portion S1 and the second hollow portion S2, gas from at least one of the first hollow portion S1 and the second hollow portion S2 may be blown onto the exhaust valve 21ab, causing the exhaust valve 21ab to open, and also there is a concern that part of the electrode assemblies 80 inside the housing case 20 may be expelled to the outside of the housing case 20 along with the gas that is forcefully released from the exhaust valve 21ab. For example, in the first electrode assembly 81, which is a wound electrode assembly formed by winding a sheet group, one end of the group of sheets forming the first electrode assembly 81 faces the first hollow portion S1. The gas that passes through the first hollow portion S1 and that is discharged from the exhaust valve 21ab may cause the winding of the first electrode assembly 81 to unwind, and there is concern that a part of the first electrode assembly 81 will be expelled from the exhaust valve 21ab. When a part of the electrode assembly 80 is exposed to the outside air, there is a concern that the compound making up the electrode assembly will react with the air and generate high temperatures. On the other hand, when the exhaust valve 21ab is disposed between the first hollow portion S1 and the second hollow portion S2, a situation can be circumvented in which gas from the first hollow portion S1 or the second hollow portion S2 is blown directly onto the exhaust valve 21ab. As a result, even when the exhaust valve 21ab is split open, part of the electrode assemblies 80 can be suppressed from being externally expelled by being blown out with the discharging of gas.

### Second Modification

In the present embodiment, an example has been described in which the exhaust valve 21ab is disposed away from at least one of the first hollow portion S1 and the second hollow portion S2, but the embodiment of the present disclosure is not limited to this. For example, as illustrated in FIG. 11, the exhaust valve 21ab may be disposed at a position at least partially overlapping with the gap region G. Note that FIG. 11 is a plan view of the outer face of the bottom plate of the power storage cell illustrated in FIG. 8, as viewed from a position away from the bottom plate toward the cooler side in the axial direction.

By disposing the exhaust valve 21ab such that the exhaust valve 21ab overlaps with the gap region G, the area over which the exhaust valve 21ab overlaps with the electrode assemblies 80 can be reduced. As a result, when the exhaust valve 21ab is split open and the gas inside the housing case 20 is externally discharged, for example, the first electrode sheet 82 and so forth that make up the first electrode assembly 81 can be suppressed from being externally expelled, as compared to when the exhaust valve 21ab is disposed so as to overlap the electrode assemblies 80.

### Third Modification

In the present embodiment, an example is described in which the electrode assemblies 80 have the first electrode assembly 81 and the second electrode assembly 91, and the first electrode assembly 81 and the second electrode assembly 91 are arrayed adjacent to each other in the front-rear direction D, but the embodiment of the present disclosure is not limited to this. For example, the power storage cell may have three or more electrode assemblies.

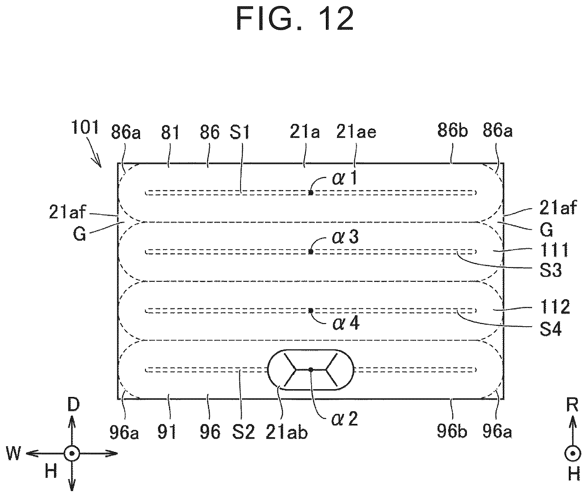

A third modification of the power storage cell 100 that is a power storage cell 101 having three or more electrode assemblies 80 will be described with reference to FIG. 12. FIG. 12 is a plan view of the third modification of the power storage cell according to the embodiment of the present disclosure, as viewed from a position away from the bottom plate toward the cooler side in the axial direction.

The electrode assemblies 80 that are included in the power storage cell 101 include the first electrode assembly 81, the second electrode assembly 91, a third electrode assembly 111, and a fourth electrode assembly 112. The third electrode assembly 111 and the fourth electrode assembly 112 each have substantially the same configuration as the first electrode assembly 81. The third electrode assembly 111 is formed by winding the electrode assembly and the separators so as to surround a third winding axis α3 extending in the axial direction A. The third electrode assembly 111 has a third hollow portion S3 formed centered on the third winding axis α3. In the same way, the fourth electrode assembly 112 is formed by winding the electrode assembly and the separators so as to surround a fourth winding axis α4 extending in the axial direction A. The fourth electrode assembly 112 has a fourth hollow portion S4 formed centered on the fourth winding axis α4.

In the power storage cell 101 having such a configuration, it is sufficient for the exhaust valve 21ab to be disposed away from at least one of the first hollow portion S1, the second hollow portion S2, the third hollow portion S3, and the fourth hollow portion S4.

### Fourth Modification

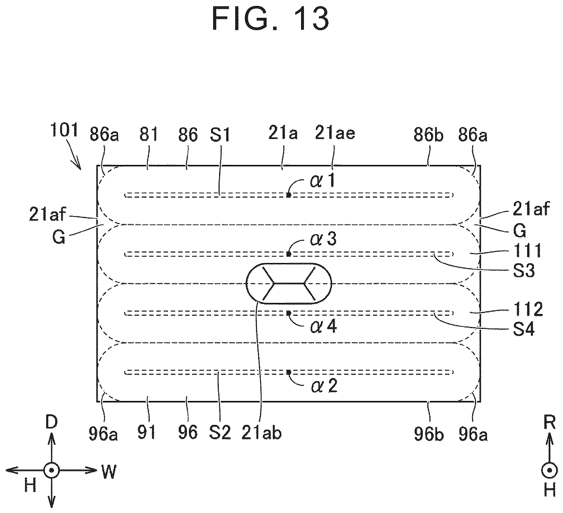

In the power storage cell 101 according to the third modification, an example is described in which the exhaust valve 21ab is disposed away from at least one of the first hollow portion S1, the second hollow portion S2, the third hollow portion S3, and the fourth hollow portion S4, but the present disclosure is not limited to this. As illustrated in FIG. 13, the exhaust valve 21ab may be disposed so as to be away from all of the first hollow portion S1, the second hollow portion S2, the third hollow portion S3, and the fourth hollow portion S4.

Although the embodiment of the present disclosure has been described above, the embodiment disclosed herein should be considered to be exemplary in all respects and not restrictive. The technical scope of the present disclosure is defined by the claims, and is intended to include all modifications within the meaning and scope equivalent to those of the claims.

## Claims

1. A power storage device (3) comprising:
a first electrode assembly (81) that includes a first electrode sheet (82), a first separator (84A), a second electrode sheet (83), and a second separator (84B), and that is fashioned so as to surround a periphery of a first winding axis (α1) extending in an axial direction;
a second electrode assembly (91) that is disposed adjacent to the first electrode assembly (81), and that also includes a third electrode sheet (92), a third separator (94A), a fourth electrode sheet (93), and a fourth separator(94B), and is fashioned so as to surround a periphery of a second winding axis (α2) extending in the axial direction; and
a housing case (20) housing the first electrode assembly (81) and the second electrode assembly (91), wherein
the housing case (20) includes a first end plate (22a) and a second end plate (21aa) on which an exhaust valve (21ab) is provided,
the first electrode assembly (81) and the second electrode assembly (91) are disposed such that the first winding axis (α1) and the second winding axis (α2) pass through the first end plate (22a) and the second end plate (21aa),
the first electrode sheet (82) is situated further on an inner peripheral side than the second electrode sheet (83) in a first radial direction that intersects with the axial direction and is also centered on the first winding axis (α1),
the third electrode sheet (92) is situated further on an inner peripheral side than the fourth electrode sheet (93) in a second radial direction that intersects with the axial direction and is also centered on the second winding axis (α2),
the first electrode assembly (81) includes a first winding end face (86) situated on the second end plate (21aa) side and a second winding end face (87) situated on the first end plate (22a) side,
a first hollow portion (S1) is fashioned inside the first electrode assembly (81), the first hollow portion extending from the first winding end face (86) to the second winding end face (87),
the first hollow portion (S1) is defined by the first electrode sheet (82) situated at an innermost side in the first radial direction,
the second electrode assembly (91) includes a third winding end face (96) situated on the second end plate (21aa) side and a fourth winding end face (97) situated on the first end plate (22a) side,
a second hollow portion (S2) is fashioned inside the second electrode assembly (91), the second hollow portion extending from the third winding end face (96) to the fourth winding end face (97),
the second hollow portion (S2) is defined by the third electrode sheet (92) situated at an innermost side in the second radial direction, and
when the exhaust valve (21ab), the first winding end face (86), and the third winding end face (96) are viewed in plan view from the axial direction, the exhaust valve (21ab) is disposed so as to be away from at least one of the first hollow portion (S1) and the second hollow portion (S2).

2. The power storage device (3) according to claim 1, wherein, when the exhaust valve (21ab), the first winding end face (86), and the third winding end face (96) are viewed in plan view from the axial direction, the exhaust valve (21ab) is disposed between the first hollow portion (S1) and the second hollow portion (S2).

3. The power storage device (3) according to claim 1, wherein
the second end plate (21aa) includes an inner face and an outer face that are aligned in the axial direction,
the outer face is disposed away from the first electrode assembly (81) and the second electrode assembly (91) relative to the inner face,
the outer face includes an outer edge portion defining an outer edge of the outer face,
a first arcuate portion (86a) is fashioned at a side end portion of the first winding end face (86),
a second arcuate portion (96a) is fashioned at a side end portion of the third winding end face (96),
when the outer face, the first winding end face (86), and the third winding end face (96) are viewed in plan view in the axial direction, the outer edge portion, the first arcuate portion (86a), and the second arcuate portion (96a) define a gap region (G) on the outer face, and
the exhaust valve (21ab) is disposed at a position at least partially overlapping with the gap region (G).

4. The power storage device (3) according to claim 1, further comprising a cooler (13), wherein
the second end plate (21aa) includes an opening portion (7a),
the cooler (13) does not face the opening portion (7a) in the axial direction, and
the exhaust valve (21ab) faces at least a part of the opening portion (7a) in the axial direction.

5. The power storage device (3) according to claim 4, wherein
the second end plate (21aa) includes an inner face and an outer face that are arrayed in the axial direction, and a counterface region (21ae) defined within the outer face,
the outer face is disposed away from the first electrode assembly (81) and the second electrode assembly (91) relative to the inner face,
the counterface region (21ae) is a region in which the outer face and the first winding end face (86) overlap each other when the outer face and the first winding end face (86) are viewed in plan view from the axial direction,
the cooler (13) is disposed at a position facing the counterface region (21ae) in the axial direction, and
the exhaust valve (21ab) is disposed so as to circumvent the counterface region (21ae).

6. The power storage device (3) according to claim 1, wherein the first end plate (22a) is provided with an electrode terminal(22e).

7. The power storage device (3) according to claim 1, wherein the power storage device (3) is disposed downward from a bottom portion (2a) of a vehicle (1), and the first end plate (22a) is disposed closer to the bottom portion (2a) than the second end plate (21aa).
